# FASCICULE DE BREVET EUROPEEN

(11) **EP 0 467 723 B1**
(45) Date de publication et mention de la délivrance du brevet: **07.09.1994**
(21) Numéro de dépôt: 91401511.0
(22) Date de dépôt: 10.06.1991
(51) Int. Cl.: F16D 25/14, F16D 25/11, F15B 5/00

(54) **Distributeur d'un fluide à commande bi-fluidique**
Flüssigkeitsverteiler mit zweifacher Fluid-Steuerung
Fluid distributor for a two-fluid control

(30) Priorité: 17.07.1990 IT 6755190
(43) Date de publication de la demande: 22.01.1992
(73) Titulaire: AlliedSignal Automotive Italia Spa, 26013 Crema (IT)
(72) Inventeur: Cadeddu, Leonardo, BENDIX EUROPE, F-93700 Drancy (FR)
(74) Mandataire: Bentz, Jean-Paul

(56) Documents cités:
- FR-A- 2 253 646
- FR-A- 2 612 464
- GB-A- 2 143 915

## Description

La présente invention concerne un distributeur d'un fluide issu d'une source sous une première pression, à commande bi-fluidique. Un tel distributeur trouve notamment une application dans les actionneurs hydrauliques pouvant être commandés en mode manuel ou mode automatique, par exemple les actionneurs d'embrayage pour véhicules automobiles.

Plus précisément, l'invention se rapporte à un distributeur d'un fluide issu d'une première source de fluide sous pression élevée, à commande bi-fluidique, comprenant, dans un alésage borgne pratiqué dans un corps, un piston coulissant définissant, avec un bouchon de l'alésage, une première chambre de commande reliée à une première source de fluide de commande, un tiroir assurant une communication entre la première source de fluide sous pression élevée ou un réservoir de fluide sous basse pression et un conduit de sortie du fluide distribué, le tiroir étant rappelé en position de repos en butée contre le piston par un moyen élastique.

Un dispositif de ce type est par exemple décrit dans le document FR-A-2 612 464, la conception de ce dispositif antérieur rendant nécessaire l'utilisation de deux fluides différents et plus précisément un fluide hydraulique et un fluide gazeux.

Selon l'invention, l'alésage et le piston sont étagés de façon correspondante, de manière à déterminer entre eux une chambre de réaction, laquelle est reliée en permanence au conduit de sortie, et une seconde chambre de commande, ménagée entre le tiroir et le piston est reliée à une seconde source de fluide de commande.

De préférence, cette seconde source de fluide de commande est pilotée par une électrovalve, par exemple proportionnelle.

L'invention concerne également un actionneur hydraulique comprenant au moins un piston et deux chambres de travail isolées l'une de l'autre, et comprenant un distributeur du type précité, dont le conduit de sortie du fluide distribué est relié à l'une des chambres de travail, et dont la première chambre de commande est reliée à l'autre des chambres de travail.

L'invention sera mieux comprise et d'autres buts, avantages et caractéristiques de celle-ci apparaîtront plus clairement à la lecture de la description qui suit d'un exemple de réalisation donné à titre non limitatif, et à laquelle une planche de dessins est jointe sur laquelle:
- La Figure 1 représente schématiquement en coupe un distributeur conforme à l'invention ;
- La Figure 2 représente schématiquement un actionneur hydraulique incorporant le distributeur de la Figure 1.

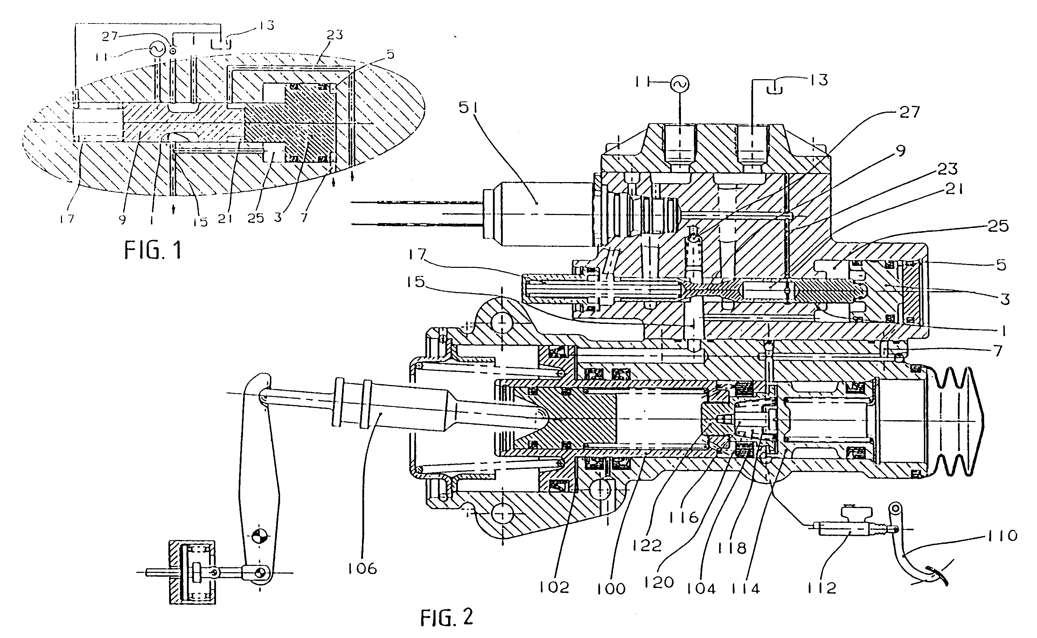

En référence maintenant à la Figure 1, le distributeur représenté comporte un alésage borgne étagé 1 pratiqué dans un corps. Un piston 3 étagé de façon correspondante coulisse dans cet alésage 1 et définit avec ce dernier une première chambre de travail 5 à laquelle est relié un conduit 7 connecté à une première source de fluide de commande (par exemple l'émetteur de pression 112 commandé par une pédale 110 comme représenté Figure 2).

Un tiroir 9 normalement en appui sur le piston 3, assure une communication entre une source de fluide sous pression élevée 11 ou un réservoir de fluide sous basse pression 13 et un conduit de sortie 15 relié au circuit utilisateur. Un ressort de rappel 17 assure le positionnement au repos des tiroir 9 et piston 3.

Une chambre de réaction 25 ménagée également entre l'alésage 1 et le piston 3 est reliée en permanence au conduit 15, c'est- à-dire au circuit utilisateur, faisant de ce distributeur un distributeur équilibré.

Comme indiqué précédemment, une deuxième chambre de commande 21 est ménagée entre le tiroir 9 et le piston 3. Cette chambre est reliée par un conduit 23 à une deuxième source de fluide de commande.

Le fonctionnement de ce distributeur sera décrit en relation avec l'ensemble représenté Figure 2 sur laquelle les références précitées ont été reportées.

Figure 2, on a représenté le distributeur ci-avant décrit dans une des applications à la commande d'un actionneur hydraulique d'embrayage.

L'actionneur est, dans l'exemple représenté du type à rattrapage d'usure, mais cela n'est pas nécessaire. Il comporte essentiellement un piston étagé 100 définissant, avec un alésage correspondant deux chambres de travail 102 et 104. Ce piston 100 assure le déplacement d'une tige de sortie 106 commandant un embrayage. Une pédale 110 permet d'actionner un émetteur 112 relié à la chambre de travail 104 et à l'entrée 7 de la chambre de commande 5 du distributeur. Le conduit de sortie 15 du distributeur est reliée à l'autre chambre de travail 102 de l'actionneur.

Le dispositif fonctionne ainsi en mode manuel. Lorsque le conducteur appuie sur la pédale 110, il génère une pression qui fait coulisser le piston 100 et le piston 3 déplace le tiroir 9. Un fluide sous pression est alors amené via le conduit 15 à la chambre de travail 102, ce qui détermine une assistance au débrayage. A noter que grâce au distributeur équilibré selon l'invention, la pression d'assistance, c'est- à- dire la pression du fluide dans la chambre de travail 102 est proportionnelle à celle régnant dans la chambre de travail 104, et le conducteur peut ainsi totalement contrôler l'action puisque la pression dans la chambre de réaction 25 lui assure une sensation à la pédale.

Le dispositif peut également fonctionner avec une commande électrique.

L'électrovalve 51 est alors excitée avec un courant dont l'intensité est proportionnelle à la pression d'asservissement. Un fluide dont la pression est modulée par l'électrovalve 51 est amené par le conduit 23 à la deuxième chambre de commande 21, ce qui entraîne un déplacement du tiroir 9, et par la suite définit la pression du fluide distribué par la sortie 15 à la chambre de travail 102. Le piston 3 reste alors immobile en position de repos comme représenté.

On notera qu'un piston mobile 114 de type connu en soi, se déplacera en même temps que le piston 100 de l'actionneur pour éviter que la chambre de travail 104 augmente sensiblement de volume, c'est-à-dire pour éviter une circulation de fluide entre l'émetteur 112 et la chambre 104.

En effet, le fluide sous pression dans la chambre de travail 102 déplace le piston 100 (vers la gauche sur la Figure 2) entrainant le piston 122 qui lui est solidaire. Un ressort conique 120, qui a une charge supérieure à celle du ressort situé dans la chambre interne du piston 114, maintient celui-ci en position de repos. Quand le piston 122 vient en contact avec le joint annulaire formant clapet, et ferme ainsi le passage du fluide entre la chambre 104 et la chambre interne du piston 100, cette dernière est isolée et forme un mur hydraulique. Une vis 116 qui est solidaire des pistons 100 et 122 vient alors en contact d'une butée 118 du ressort 120. En continuant à se déplacer, les pistons 100, 122 et la vis 116 entrainent le déplacement de la butée 118, ce qui a pour conséquence d'annuler l'effet du ressort 120 sur le piston 114. Ce dernier va alors se déplacer avec l'ensemble grâce à un ressort judicieusement disposé par rapport à ce piston 114.

Il faut également noter que pendant que l'actionneur représenté fonctionne selon un mode, l'autre mode peut être choisi par le conducteur sans effet négatif.

Enfin, du fait de la séparation des deux circuits fluidiques, une défaillance de l'un deux n'empêche pas le fonctionnement de l'autre circuit.

Un conduit pourvu d'un clapet unidirectionnel 27 permet de créer un passage entre le réservoir 13 et la chambre 102 en cas de défaillance de la source 11, ce qui permet d'éviter toute dépression dans cette chambre 102.

L'Homme de l'Art aura compris que de nombreuses modifications pourront être apportées à la présente invention sans sortir du cadre de l'invention tel que défini par les revendications jointes.

Notamment, l'électrovalve préférée 51 est du type proportionnel. Toutefois, on pourrait également utiliser une électrovalve classique fonctionnant en tout-ou-rien en contrôlant sa fréquence de battement.

## Revendications

1. Distributeur d'un fluide issu d'une première source (11) de fluide sous pression élevée, à commande bi-fluidique, comprenant, dans un alésage borgne (1) pratiqué dans un corps, un piston coulissant (3) définissant, avec un bouchon de l'alésage, une première chambre de commande (5) reliée à une première source de fluide de commande, un tiroir (9) assurant une communication entre la dite première source (11) de fluide sous pression élevée ou un réservoir (13) de fluide sous basse pression et un conduit de sortie (15) du fluide distribué, le dit tiroir (9) étant rappelé en position de repos en butée contre le dit piston (3) par un moyen élastique (17), caractérisé en ce que le dit alésage (1) et le dit piston (3) sont étagés de façon correspondante, de manière à déterminer entre eux une chambre de réaction (25), laquelle est reliée en permanence au dit conduit de sortie (15), et qu'une seconde chambre de commande (21) est ménagée entre le dit tiroir (9) et le dit piston (3) et est reliée à une seconde source de fluide de commande.

2. Dispositif selon la revendication 1 caractérisé en ce que la dite seconde source de fluide de commande est pilotée par une électrovalve (51).

3. Dispositif selon la revendication 2 caractérisé en ce que la dite électrovalve (51) est une électrovalve proportionnelle.

4. Actionneur hydraulique comprenant au moins un piston (100) et deux chambres de travail (102, 104) isolées l'une de l'autre, caractérisé en ce qu'il comprend en outre un distributeur selon l'une des revendications précédentes, dont le conduit de sortie (15) du fluide distribué est relié à l'une (102) des dites chambres de travail, et dont la première chambre de commande (5) est reliée à l'autre (104) des dites chambres de travail.

## Claims

1. Bifluidically controlled distributor of a fluid coming from a first source (11) of a fluid under high pressure, comprising, in a blind bore (1) made in a body, a sliding piston (3) defining, with a plug of the bore, a first control chamber (5) connected to a first source of control fluid, a slide (9) ensuring communication between said first source (11) of fluid under high pressure or a reservoir (13) of fluid under low pressure and an outlet conduit (15) for the distributed fluid, said slide (9) being returned to the rest position up against said piston (3) by an elastic means (17), characterized in that said bore (1) and said piston (3) are stepped correspondingly, so as to determine between them a reaction chamber (25) connected permanently to said outlet conduit (15) and in that a second control chamber (21) is formed between said slide (9) and said piston (3) and is connected to a second source of control fluid.

2. Device according to Claim 1, characterized in that said second source of control fluid is controlled by a solenoid valve (51).

3. Device according to Claim 2, characterized in that said solenoid valve (51) is a proportional solenoid valve.

4. Hydraulic actuator comprising at least one piston (100) and two working chambers (102, 104) isolated from one another, characterized in that it comprises, furthermore, a distributor according to any of the preceding claims, of which the outlet conduit (15) for the distributed fluid is connected to one (102) of said working chambers and the first control chamber (5) of which is connected to the other (104) of said working chambers.

## Patentansprüche

1. Verteiler mit Zwei-Fluid-Steuerung für ein von einer ersten Hochdruckfluidquelle (11) abgegebenes Fluid, der in einer in einem Körper ausgebildeten Blindbohrung (1) einen gleitenden Kolben (3) enthält, der zusammen mit einem Stopfen der Bohrung eine mit einer ersten Steuerfluidquelle verbundene, erste Steuerkammer (5) abgrenzt, sowie einen Schieber (9), der eine Verbindung zwischen der ersten Hochdruckfluidquelle (11) oder einem Niederdruckfluidvorratsbehälter (13) und einer Ausgangsleitung (15) für verteiltes Fluid gewährleistet, wobei der Schieber (9) durch ein elastisches Mittel (17) in die Ruhestellung in Anlage am Kolben (3) zurückgestellt wird, dadurch gekennzeichnet, daß die Bohrung (1) und der Kolben (3) einander entsprechend derart stufig ausgebildet sind, daß zwischen ihnen eine Reaktionskammer (25) bestimmt ist, die permanent mit der Ausgangsleitung (15) verbunden ist, und daß zwischen dem Schieber (9) und dem Kolben (3) eine zweite Steuerkammer (21) ausgebildet ist, die mit einer zweiten Steuerfluidquelle verbunden ist.

2. Vorrichtung nach Anspruch 1, dadurch gekennzeichnet, daß die zweite Steuerfluidquelle durch ein Elektroventil (51) gesteuert ist.

3. Vorrichtung nach Anspruch 2, dadurch gekennzeichnet, daß das Elektroventil (51) ein Proportional-Elektroventil ist.

4. Hydraulische Betätigungsvorrichtung mit wenigstens einem Kolben (100) und zwei voneinander isolierten Arbeitskammern (102, 104), dadurch gekennzeichnet, daß sie außerdem einen Verteiler nach einem der vorhergehenden Ansprüche enthält, dessen Ausgangsleitung (15) für verteiltes Fluid mit einer (102) der Arbeitskammern verbunden ist und dessen erste Steuerkammer (5) mit der anderen (104) der Arbeitskammern verbunden ist.
